# EUROPEAN PATENT SPECIFICATION

(11) **EP 0 495 392 B1**
(45) Date of publication and mention of the grant of the patent: **08.04.1998**
(21) Application number: 92100264.8
(22) Date of filing: 09.01.1992
(51) Int. Cl.: B01D 53/86

(54) **Method of rendering harmless the waste gas from chemical vapor deposition process**
Verfahren zum Unschädlichmachen von Abgas aus einem chemischen Dampfniederschlagsverfahren
Procédé pour rendre inoffensifs des gaz d'échappement d'un procédé de dépôt chimique en phase vapeur

(30) Priority: 18.01.1991 JP 16745/91
(43) Date of publication of application: 22.07.1992
(73) Proprietor: EBARA CORPORATION, Ohta-ku, Tokyo (JP)
(72) Inventor: Fukunaga, Akira, Fujisawa-shi, Kanagawa-ken (JP); Okayasu, Yasuji, Fujisawa-shi, Kanagawa-ken (JP)
(74) Representative: Nöth, Heinz, Dipl.-Phys.

(56) References cited:
- EP-A- 0 246 031
- EP-A- 0 335 792
- EP-A- 0 437 901
- US-A- 4 448 757
- WORLD PATENTS INDEX Week 7611, Derwent Publications Ltd., London, GB; AN 76- 19595X
- PATENT ABSTRACTS OF JAPAN vol. 12, no. 275 (C-516)(3122) 29 July 1988

## Description

This invention relates to a method of rendering harmless the waste gase from a chemical vapor deposition (CVD) process that uses an organic source of tetraethoxysilane (TEOS), triethoxyarsine (TEOA), trimethyl phosphite (TMP) or trimethoxyborane (TMB), as defined by the preamble of claim 1.

With the recent increase in the scale of integration and packing density of Very-Large-Scale-Integrated-Circuits (VLSIs), hydrides such as monosilane that have heretofore been used in the formation of silicon oxide films in a CVD process are increasingly being supplanted by organic sources typified by TEOS. While several methods have been proposed for rendering harmless the waste gases from a CVD process that uses hydrides, no proposal has yet been made as regards the technique of rendering harmless the waste gases from a CVD process that uses organic sources. However, in view of the increasing use of organic sources, the demand for an effective method that is capable of rendering the waste gas from the new CVD process totally harmless is constantly growing.

Adsorption on activated carbon is a common method for rendering organic waste gases harmless. However, according to investigations conducted by the present inventors, the harmful components of waste gases from a CVD process using organic sources such as TEOS, TEOA, TMP and TMB include not only the organic sources used but also their decomposition products having different properties such as alcohols, aldehydes, ketones, ethers and carbon monoxide and it has been difficult to perform the intended treatment consistently over an extended period using only activated carbon.

When the present inventors conducted an activated carbon treatment on the waste gas from a CVD process using TEOS as an organic source, TEOS itself could be completely trapped over an extended period but carbon monoxide as a decomposition product was discharged in its total amount from the beginning of the treatment and acetaldehyde and ethanol subsequently leaked out in small amounts.

The same results were obtained with the other organic sources. Therefore, one may well say that waste gases from a CVD process using the organic sources can be completely treated if decomposition products such as aldehydes, alcohols and carbon monoxide that leak out in the course of treatment of the organic sources with activated carbon can be rendered harmless by a certain method.

The Document "World Patents Index", Week 7611, Derwent Publications Ltd., AN 76-19595X, reporting on the Document JP-A-51 011 068, describes the treatment of waste gas from semiconductor production by mixing the waste gas with ozone-rich air and decomposing poisonous substances in the waste gas to substances such as As₂O₃, P₂O₅, etc. of low toxicity in a reaction tower. Unreacted poisonous substances such as AsH₃, PH₃, etc. are adsorbed onto activated carbon and an oxidation catalyst in another reaction tower and converted into oxides such as As₂O₃, P₂O₅, etc. by the ozone which is similarly adsorbed on the activated carbon and the catalyst. The resulting oxides are adsorbed on the activated carbon.

The Document EP-A-0 335 792 describes a method for the destruction of hydrides such as silane, phosphine, arsine, etc. contained in a waste gas from an epitaxial or a CVD process by using an oxidation catalyst containing copper oxide as a reactive agent, and manganese dioxide as a promoter. The oxidation temperature is below 500°C, preferably below 100°C.

The Document US-A-4 448 757 describes a process for rendering compressed air containing oil mist and vapour, carbon monoxide, thermal decomposition products of lubricants used in the compressor and contaminants such as hydrogen sulfide, sulfur dioxide, acetone, benzene and other vapours from industrial chemicals suitable for breathing. The compressed air is cooled to condense and remove water and other vapours. This extends the useful life of a subsequently used absorbent. Condensate vapours and gases of low boiling point substances such as formaldehyde and H₂S are removed at the low temperature with activated charcoal or another adsorbent. The only common toxic substance not adsorbed is carbon monoxide which is converted to carbon dioxide by heating the air to reduce its relative humidity to below 5 % and passing it through one or more catalysts such as Hopcalite or a platinum catalyst that can oxidize carbon monoxide below 200°F (93.3°C).

An object, therefore, of the present invention is to provide a method, as defined by the preamble of claim 1, for rendering the waste gas from a CVD process harmless by which not only organic sources used in the CVD process but also their decomposition products such as aldehydes, alcohols and carbon monoxide can be removed.

This object of the present invention can be attained using the features of the characterizing portion of claim 1.

Stated more specifically, the present invention provides a method of rendering harmless the waste gas from a CVD process that contains not only an organic source such as TEOS but also its decomposition products such as an alcohol, an aldehyde and carbon monoxide. In the first step of this method, the waste gas is contacted by activated carbon so as to remove the greater part of the organic matter by adsorption on the activated carbon and, in the next step, the carbon monoxide which is not amenable to the treatment with activated carbon and the alcohol and aldehyde which continue to leak out in small amounts are brought into an oxidation catalyst in the presence of oxygen so that those decomposition products are converted to harmless water and carbon dioxide.

Other objects and advantages of the present invention will become apparent to those skilled in the art from the following description and disclosure.

In the method of the present invention, the waste gas is first brought into contact with activated carbon at a linear velocity (hereunder referred to as "LV") of about 300 cm/min or less at ambient temperature and then it is brought into contact with an oxidation catalyst in the presence of oxygen at a space velocity (hereunder referred to as "S.V.") of about 10,000 h⁻¹ or less at a temperature of about 120 - 200°C. The amount of said oxygen is held at all times at a level that is not lower than the sum of the stoichiometric amounts of oxygen that are necessary to completely oxidize the CH₃CHO, C₂H₅OH and CO present in the waste gas. The oxidation catalyst is selected from the group consisting of MnO₂, CuO, NiO, Co₃O₄. Fe₂O₃, a composite oxide thereof, Pt and Pd.

The waste gas from a CVD process using an organic source such as TEOS contains not only the unreacted organic source but also harmful components such as carbon monoxide, alcohols, aldehydes, ethers and ketones which are decomposition products of the organic source. By treatment with activated carbon, all components of the waste gas except carbon monoxide can be readily adsorbed. However, alcohols and aldehydes are present in such great amounts that they will continue to leak out in small amounts even in the process of continued adsorption of the other components. Hence, in the method of the present invention, a vessel containing the activated carbon is connected to a subsequent vessel containing the oxidation catalyst, where the carbon monoxide that cannot be removed in the first stage and the alcohols and aldehydes which leak out in very small amounts are converted to harmless water and carbon dioxide in the presence of oxygen.

The activated carbon used in the first stage of the treatment may be of any type and shape as long as it has a large capacity for adsorbing alcohols, aldehydes and other decomposition products of the organic sources used in a CVD process.

The oxidation catalyst may be based on noble or transition metals and an oxide thereof, but from the viewpoints of performance, Pt, Pd, MnO₂ and CuO are advantageously used, and, in view of price, MnO₂ is more preferred.

The temperature for reaction with the catalyst is preferably at least 120°C in order to avoid any disturbing action of non-toxic components such as water, carbon dioxide, hydrogen and hydrocarbons that are present in the waste gas. However, if the reaction temperature is too high, not only is it necessary to expend extra energy but also even hydrocarbons which have no toxicity will be decomposed, requiring oxygen to be used in a large and hence uneconomical amount. Further, the catalyst itself has limited heat resistance. In consideration of these facts, there is no need to raise the reaction temperature beyond 200°C. The catalyst may be heated by any common method such as external heating with an electric heater.

In determining the amount of oxygen to be used for contact with the oxidation catalyst, one must take into account the fact that alcohols and aldehydes leak out of the preceding activated carbon vessel in gradually increasing amounts. With a margin of safety being considered, the amount of oxygen may be held at a level not lower than is necessary to insure that all of the carbon monoxide, alcohols and aldehydes contained in the waste gas from a CVD process can be completely oxidized to water and carbon dioxide. Either oxygen or air may be used as an oxygen source and they may be introduced at any position that is upstream of the catalyst vessel.

What is characteristic of the waste gas from a CVD process using organic sources is that it contains high-boiling substances such as the organic sources, alcohols and aldehydes and these components will be kept discharged in small amounts even after the end of the CVD process. Therefore, more than a strictly necessary amount of oxygen must be supplied and the catalyst temperature must be maintained at a predetermined value at all times of the treatment whether it is conducted during or after the CVD process in order to insure that all components of the waste gas are rendered completely harmless.

The following example is provided for the purpose of further illustrating the present invention but is in no way to be taken as limiting.

### Example 1

A vessel (250 mm^{⌀} × 350 mm^{h}) packed with 17 ℓ of activated carbon prepared from coconut shells was connected in series to a subsequent vessel (200 mm^{⌀} × 80 mm^{h}) that was adapted to be externally heated and that was packed with 2.5 ℓ of a MnO₂ based catalyst. With the temperature at the center of the catalyst vessel being maintained at 150°C, the waste gas from a CVD process that had the composition shown below was fed into the treatment system at a rate of 20 ℓ/min corresponding to a LV of 40 cm/min in the first stage and a S.V. of 500 h⁻¹ in the second stage, with oxygen added to provide a concentration of 2% (20,000 ppm) to render the waste gas harmless:

| | |
|---|---|
| TEOS | 1400 ppm |
| CH₃CHO | 3600 ppm |
| C₂H₅OH | 2100 ppm |
| CO | 4500 ppm |
| H₂ | 2000 ppm |
| C₂H₄ | 2100 ppm |

As a result, the concentration of CO exceeded a TLV (threshold limit value: 50 ppm) at the point of time that was equivalent to 2510 min in terms of the total CVD time. During the same period, the amounts of TEOS, CH₃CHO and C₂H₅OH were reduced to below their detection limits and the amounts of H₂ and C₂H₄ did not change.

### Comparative Example 1

The waste gas from a CVD process was rendered harmless by repeating the procedure of Example 1 except that the concentration of oxygen was adjusted to 0.25% (2500 ppm) which was slightly higher than 2250 ppm, or the level necessary for oxidizing CO alone (i.e. without oxidizing CH₃CHO and C₂H₅OH). The concentration of CO exceeded a TLV at the point of time that was equivalent to 720 min in terms of the total CVD time. At that time, the concentrations of CH₃CHO and C₂H₅OH at the inlet to the catalyst vessel were 30 ppm and 55 ppm, respectively.

### Comparative Example 2

The waste gas from a CVD process was rendered harmless by repeating the procedure of Example 1 except that the temperature at the center of the catalyst vessel was maintained at 100°C. The concentration of CO exceeded a TLV at the point of time that was equivalent to 960 min in terms of the total CVD time.

### Comparative Example 3

The waste gas from a CVD process was rendered harmless by repeating the procedure of Example 1 except that the temperature at the center of the catalyst vessel was maintained at 270°C. The concentration of CO exceeded a TLV at the point of time that was equivalent to 2040 min in terms of the total CVD time. Non-toxic C₂H₄ was also found to have been decomposed.

### Example 2

The waste gas from a CVD process was rendered harmless by repeating the procedure of Example 1 except that the waste gas from a CVD process that had the composition shown below was fed into the treatment system at a rate of 150 ℓ/min (corresponding to a LV of 300 cm/min in the first stage and a S.V. of 3750 h⁻¹ in the second stage), with oxygen added to provide a concentration of 0.15% (1500 ppm) to render the waste gas harmless:

| | |
|---|---|
| TEOS | 120 ppm |
| CH₃CHO | 230 ppm |
| C₂H₅OH | 150 ppm |
| CO | 190 ppm |
| H₂ | 150 ppm |
| C₂H₄ | 100 ppm |

As a result, the concentration of CO exceeded a TLV at the point of time that was equivalent to 2230 min in terms of the total CVD time.

### Example 3

A vessel (250 mm^{⌀} × 500 mm^{h}) packed with 50 ℓ of activated carbon prepared from coconut shells was connected in series to a subsequent vessel (115 mm^{⌀} × 50 mm^{h}) adapted to be externally heated and that was packed with 0.5 ℓ of a MnO₂ based catalyst. With the temperature at the center of the catalyst vessel being maintained at 150°C, the waste gas from a CVD process that had the composition as shown in Example 2 was fed into the treatment system at a rate of 150 ℓ/min corresponding to a LV of 150 cm/min in the first stage and a S.V. of 6,000 h⁻¹ in the second stage, with oxygen added to provide a concentration of 0.15% (1,500 ppm) to render the waste gas harmless:

As a result, the concentration of CO exceeded a TLV at the point of time that was equivalent to 7,000 min in terms of the total CVD time.

## Claims

1. A method of rendering harmless the waste gas from a chemical vapour deposition process that uses an organic source of tetraethoxysilane, triethoxyarsine, trimethyl phosphite or trimethoxyborane by bringing the waste gas into contact with activated carbon and an oxidation catalyst,
characterized in that the waste gas is first brought into contact with the activated carbon at a linear velocity of about 300 cm/min or less at ambient temperature, and then brought into contact with the oxidation catalyst in the presence of oxygen at a space velocity of about 10,000 h⁻¹ or less at a temperature of about 120 to 200°C, the amount of oxygen being held at all times at a level that is not lower than the sum of the stoichiometric amounts of oxygen that are necessary to completely oxidize the CH₃CHO, C₂H₅OH and CO present in the waste gas.

2. A method according to claim 1, characterized in that an oxidation catalyst selected from the group consisting of MnO₂, CuO, Pt and Pd is used.

3. A method according to claim 1 or 2, characterized in that the waste gas is brought into contact with the activated carbon at a linear velocity of about 150 cm/min or less.

4. A method according to any one of claims 1 to 3, characterized in that the waste gas is brought into contact with the oxidation catalyst in the presence of oxygen at a space velocity of about 6,000 h⁻¹ or less.

5. A method according to any one of claims 1 to 4, characterized in that the waste gas is brought into contact with the oxidation catalyst at a temperature of about 120 to 160°C.

6. A method according to any one of claims 1 to 4, characterized in that the waste gas is brought into contact with the activated carbon at a linear velocity of about 40 cm/min at ambient temperature, and then brought into contact with the oxidation catalyst in the presence of oxygen at a space velocity of about 500 h⁻¹ at a temperature of about 120 to 200°C.

## Patentansprüche

1. Verfahren zum Unschädlichmachen des Abgases aus einem Verfahren zur chemischen Abscheidung aus der Gasphase, in dem eine organische Quelle von Tetraethoxysilan, Triethoxyarsin, Trimethylphosphit oder Trimethoxyboran eingesetzt wird, durch Inkontaktbringen des Abgases mit Aktivkohle und einem Oxidationskatalysator,
dadurch gekennzeichnet, daß das Abgas zuerst mit einer linearen Geschwindigkeit von etwa 300 cm/min oder weniger bei Umgebungstemperatur mit der Aktivkohle in Kontakt gebracht wird, und dann in der Gegenwart von Sauerstoff mit einer Raumgeschwindigkeit von etwa 10.000 h⁻¹ oder weniger bei einer Temperatur von etwa 120 bis 200°C mit dem Oxidationskatalysator in Kontakt gebracht wird, wobei die Menge des Sauerstoffes zu allen Zeiten bei einem Pegel gehalten wird, die nicht unterhalb der Summe der stöchiometrischen Mengen an Sauerstoff liegt, die erforderlich sind, um das im Abgas vorhandene CH₃CHO, C₂H₅OH und CO vollkommen zu oxidieren.

2. Verfahren nach Anspruch 1, dadurch gekennzeichnet, daß ein Oxidationskatalysator verwendet wird, der ausgewählt ist aus der Gruppe bestehend aus MnO₂, CuO, Pt und Pd.

3. Verfahren nach Anspruch 1 oder 2, dadurch gekennzeichnet, daß das Abgas mit einer linearen Geschwindigkeit von etwa 150 cm/min oder weniger mit der Aktivkohle in Kontakt gebracht wird.

4. Verfahren nach einem der Ansprüche 1 bis 3, dadurch gekennzeichnet, daß das Abgas in der Gegenwart von Sauerstoff mit einer Raumgeschwindigkeit von etwa 6.000 h⁻¹ oder weniger mit dem Oxidationskatalysator in Kontakt gebracht wird.

5. Verfahren nach einem der Ansprüche 1 bis 4, dadurch gekennzeichnet, daß das Abgas bei einer Temperatur von etwa 120 bis 160°C mit dem Oxidationskatalysator in Kontakt gebracht wird.

6. Verfahren nach einem der Ansprüche 1 bis 4, dadurch gekennzeichnet, daß das Abgas mit einer linearen Geschwindigkeit von etwa 40 cm/min bei Umgebungstemperatur mit der Aktivkohle in Kontakt gebracht wird, und dann in der Gegenwart von Sauerstoff mit einer Raumgeschwindigkeit von etwa 500 h⁻¹ bei einer Temperatur von etwa 120 bis 200°C mit dem Oxidationskatalysator in Kontakt gebracht wird.

## Revendications

1. Procédé pour rendre inoffensif l'effluent gazeux issu d'un procédé de dépôt chimique en phase vapeur qui utilise une source crganique de tétraéthoxysilane, de triéthoxyarsine, de triméthylphosphite ou de triméthoxyborane, en mettant l'effluent gazeux en contact avec du charbon actif et avec un catalyseur d'oxydation,
caractérisé en ce que l'effluent gazeux est tout d'abord mis en contact avec le charbon actif à une vitesse linéaire d'environ 300 cm/min ou moins, à température ambiante, et qu'il est ensuite mis en contact avec le catalyseur d'oxydation, en présence d'oxygène, à une vitesse spatiale d'environ 10 000 h⁻¹ ou moins, à une température d'environ 120 à 200°C, la quantité d'oxygène étant maintenue à tous moments à un niveau qui n'est pas inférieur à la somme des quantités stoechiométriques d'oxygène qui sont nécessaires pour oxyder complètement le CH₃CHO, le C₂H₅OH et le CO présents dans l'effluent gazeux.

2. Procédé selon la revendication 1, caractérisé en ce qu'on utilise un catalyseur d'oxydation choisi parmi le groupe constitué de MnO₂, CuO, Pt et Pd.

3. Procédé selon la revendication 1 ou 2, caractérisé en ce que l'effluent gazeux est mis en contact avec le charbon actif à une vitesse linéaire d'environ 150 cm/min ou moins.

4. Procédé selon l'une quelconque des revendications 1 à 3, caractérisé en ce que l'effluent gazeux est mis en contact avec le catalyseur d'oxydation en présence d'oxygène, à une vitesse spatiale d'environ 6000 h⁻¹ ou moins.

5. Procédé selon l'une quelconque des revendications 1 à 4, caractérisé en ce que l'effluent gazeux est mis en contact avec le catalyseur d'oxydation à une température d'environ 120 à 160°C.

6. Procédé selon l'une quelconque des revendications 1 à 4, caractérisé en ce que l'effluent gazeux est mis en contact avec le charbon actif à une vitesse linéaire d'environ 40 cm/min à température ambiante, et en ce qu'il est ensuite mis en contact avec le catalyseur d'oxydation, en présence d'oxygène, à une vitesse spatiale d'environ 500 h⁻¹, à une température d'environ 120 à 200°C.
